# EUROPEAN PATENT APPLICATION

(11) **EP 2 645 470 A1**
(43) Date of publication of application: **02.10.2013**
(21) Application number: 11842987.7
(22) Date of filing: 22.11.2011
(51) Int. Cl.: H01M 14/00, H01L 31/04

(54) **PHOTOELECTRIC TRANSDUCER AND PRODUCTION METHOD THEREFOR**

(30) Priority: 24.11.2010 JP 2010261236
(71) Applicant: Sharp Kabushiki Kaisha, Osaka-shi, Osaka 545-8522 (JP)
(72) Inventor: FUKUI, Atsushi, Osaka-shi, Osaka 545-8522 (JP); KASAHARA ,Kei, Osaka-shi, Osaka 545-8522 (JP); MIURA, Yoshiyuki, Osaka-shi, Osaka 545-8522 (JP); YAMANAKA, Ryosuke, Osaka-shi, Osaka 545-8522 (JP)
(74) Representative: Müller - Hoffmann & Partner
(86) International application number: PCT/JP2011/076886
(87) International publication number: WO 2012/070562

(57) **Abstract**

Provided is a photoelectric conversion element (10) which suppresses the generation of a reverse current and which has enhanced photoelectric conversion efficiency. The photoelectric conversion element (10) according to the present invention includes at least one support (1), conductive layer (2), photoelectric conversion layer (3), porous insulating layer (4), catalyst layer (5), counter conductive layer (6), and counter support (8) in series. The photoelectric conversion layer (3) includes a porous semiconductor sub-layer containing a semiconductor material and a photosensitizing element adsorbed on the porous semiconductor sub-layer. A carrier transport material (9) is placed between the porous insulating layer (4) and the catalyst layer (5). The porous semiconductor sub-layer and the porous insulating layer (4) contain pores. The pores are filled with the carrier transport material (9). There is no strong bonding force, obtained by deposition by a screen printing process, a vapor deposition process, or a sputtering process, between the porous insulating layer (4) and the catalyst layer (5).

## Description

### Technical Field

The present invention relates to a photoelectric conversion element and a method for fabricating the same.

### Background Art

Solar cells can convert sunlight into electrical power and therefore are attracting attention as energy sources alternative to fossil fuels. Some of solar cells including crystalline silicon substrates and thin-film silicon solar cells are now being commercialized. However, the former have a problem that the cost of producing a silicon substrate is high and the latter have a problem that various gases and complicated systems need to be used for semiconductor production and therefore manufacturing costs are high. Regarding these solar cells, although efforts have been made to reduce the cost per power output by enhancing the photoelectric conversion efficiency thereof, the above problems have not been solved.

Japanese Unexamined Patent Application Publication No. 01-220380 (Patent Literature 1) proposes a wet solar cell, which is a new type of solar cell, making use of photoinduced electron transfer in a metal complex. The wet solar cell includes two glass substrates, electrodes placed on the glass substrates, and a photoelectric conversion layer interposed between the electrodes. The photoelectric conversion layer contains an electrolyte material and a photoelectric conversion material having an absorption spectrum, due to a photosensitizing dye adsorbed thereon, in the visible range.

When the wet solar cell is irradiated with light, electrons are generated in the photoelectric conversion layer. The generated electrons migrate to the electrodes through an external electric circuit. The electrons migrating in such a way are transferred to a counter electrode by ions in an electrolyte to return to the photoelectric conversion layer. Electrical energy is drawn through such a flow of electrons.

Japanese Unexamined Patent Application Publication No. 2001-357897 (Patent Literature 2) discloses a wet solar cell, called a dye-sensitized solar cell, including two conductive substrates. This wet solar cell is completed in such a manner that a porous semiconductor layer which is a photoelectrode is formed on one of the conductive substrates, a catalyst layer is formed on the other conductive substrate, both are superimposed on each other, and surroundings thereof are sealed.

In general, electrical continuity is not established between a porous semiconductor layer which is present on a support and which is a negative electrode and a counter conductive layer which is present on a counter support and which is a positive electrode when the porous semiconductor layer and the counter conductive layer are brought into contact with each other by superimposing. Therefore, the distance between the support and the counter support need not be adjusted. However, in order to reliably prevent the contact between the porous semiconductor layer and the counter conductive layer, a gap material is mixed with a sealant or a spacer is provided between the supports in some cases.

WO 97/16838 (Patent Literature 3) discloses a substrate-integrated (monolithic) dye-sensitized solar cell having a structure contributing to cost reduction. This structure is as follows: a porous semiconductor layer, a porous insulating layer, a catalyst layer, and a counter conductive layer are deposited on glass equipped with a transparent conductive film in that order. In the dye-sensitized solar cell, the porous insulating layer is placed in order to electrically insulate electrons in the porous semiconductor layer, which is a negative electrode, from electrons in the counter conductive layer, which is a positive electrode, to suppress leakage.

In the dye-sensitized solar cell disclosed in Patent Literature 3, the porous insulating layer is formed on the porous semiconductor layer by a screen printing process or the like. A counter electrode or the counter conductive layer is formed on the porous insulating layer by a screen printing process, a vapor deposition process, a sputtering process, a spraying process, or the like. The porous semiconductor layer and the porous insulating layer are formed as described above and therefore cannot be separated unless separation or stripping by etching is attempted.

### Citation List

### Patent Literature

PTL 1: Japanese Unexamined Patent Application Publication No. 01-220380
PTL 2: Japanese Unexamined Patent Application Publication No. 2001-357897
PTL 3: WO 97/16838

### Summary of Invention

### Technical Problem

Photoelectric conversion elements typified by dye-sensitized solar cells have a problem that the durability thereof is reduced by external environmental factors such as light, heat, and humidity. An increase in reverse current is a cause of this problem.

The term "reverse current" as used herein refers to a phenomenon in which in a flow of electrons, electrons generated in a photoelectric conversion layer flow through a carrier transport layer and a counter conductive layer having a catalyst layer without being drawn into an external electric circuit. The reduction in conversion efficiency of a photoelectric conversion element can be prevented by suppressing the reverse current. Therefore, a technique for suppressing a reverse current generated in a photoelectric conversion element is desired.

The monolithic dye-sensitized solar cell is similar in structure to a photoelectric conversion element according to the present invention and is significantly different in performance deterioration by heat stress from the structure according to the present invention. The cause of the performance deterioration is not clear but is probably that the catalyst layer and the conductive layer are formed directly on the porous insulating layer.

The present invention has been made in view of the above circumstances and is intended to provide a photoelectric conversion element, increased in retention of photoelectric conversion efficiency, suppressing the increase of the reverse current due to heat stress.

### Solution to Problem

A photoelectric conversion element according to the present invention includes at least one support, conductive layer, photoelectric conversion layer, porous insulating layer, catalyst layer, counter conductive layer, and counter support in series. The photoelectric conversion layer includes a porous semiconductor sub-layer containing a semiconductor material and a photosensitizing element adsorbed on the porous semiconductor sub-layer. A carrier transport material is placed between the porous insulating layer and the catalyst layer. The porous semiconductor sub-layer and the porous insulating layer contain pores. The pores are filled with the carrier transport material. There is no strong bonding force, obtained by deposition by a screen printing process, a vapor deposition process, or a sputtering process, between the porous insulating layer and the catalyst layer.

The area of the porous insulating layer projected on the support is preferably greater than the area of the photoelectric conversion layer projected on the support. The porous insulating layer preferably has a thickness of 5 µm or more.

It is preferred that the porous insulating layer is one formed by layering fine particles and has pores that are 20 nm or more and 100 nm or less. The fine particles are preferably made of one or more selected from the group consisting of zirconium oxide, aluminium oxide, silicon oxide, and magnesium oxide.

The present invention provides a method for fabricating a photoelectric conversion element. The method includes a step of attaching a support having a conductive layer, a photoelectric conversion layer, and a porous insulating layer in series to a counter support having a counter conductive layer and a catalyst layer in series such that the porous insulating layer and the catalyst layer face each other and a step of injecting a carrier transport material between the support and the counter support.

### Advantageous Effects of Invention

According to the present invention, the generation of a reverse current can be suppressed due to the above configuration and therefore the photoelectric conversion efficiency of a photoelectric conversion element can be enhanced.

### Brief Description of Drawings

[Fig. 1] Fig. 1 is a schematic sectional view illustrating the configuration of a photoelectric conversion element of the present invention.
[Fig. 2] Fig. 2 is a schematic sectional view illustrating the configuration of a photoelectric conversion element of a comparative example.

### Description of Embodiments

A preferred embodiment of the present invention is described with reference to drawings. This embodiment is an example. Various modifications can be made within the scope of the present invention. In drawings of this application, the same or corresponding portions are denoted by the same reference numerals.

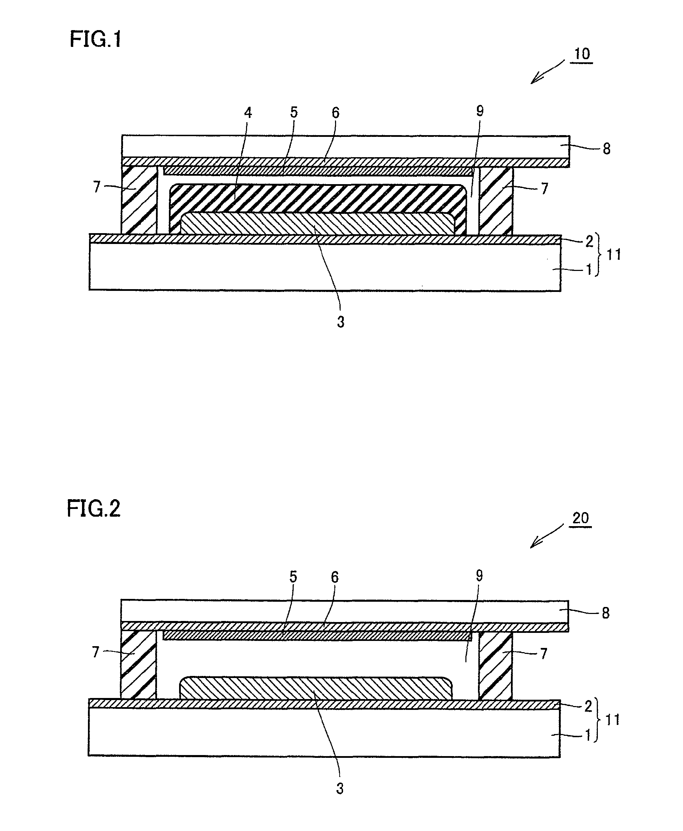

Fig. 1 is a schematic sectional view illustrating the configuration of a photoelectric conversion element (hereinafter also referred to as "solar cell") according to the present invention. With reference to Fig. 1, the photoelectric conversion element 10 according to the present invention includes at least one support 1, conductive layer 2, photoelectric conversion layer 3, porous insulating layer 4, catalyst layer 5, counter conductive layer 6, and counter support 8 in series. One made by forming the conductive layer 2 on the support 1 is referred to as a transparent electrode substrate 11 in some cases. A sealing member 7 is placed on both sides of the photoelectric conversion layer 3 and the porous insulating layer 4, which are arranged on the support 1. The sealing member 7 is connected to both of the support 1 and the counter support 8.

The photoelectric conversion layer 3 includes a porous semiconductor sub-layer containing a semiconductor material and a photosensitizing element adsorbed on the porous semiconductor sub-layer. A carrier transport material 9 is placed between the porous insulating layer 4 and the catalyst layer 5. The porous semiconductor sub-layer and the porous insulating layer 4 contain pores. The pores are filled with the carrier transport material 9. The present invention is characterized in that there is no strong bonding force, obtained by deposition by a screen printing process, a vapor deposition process, or a sputtering process, between the porous insulating layer 4 and the catalyst layer 5.

Since there is no strong bonding force between the porous insulating layer 4 and the catalyst layer 5 as described above (in particular, the porous insulating layer 4 and the catalyst layer 5 are spaced from each other as shown in Fig. 1), the increase of a reverse current flowing from the photoelectric conversion layer 3 under heat stress to the catalyst layer 5 and the counter conductive layer 6 can be suppressed. A structure in which a reverse current is unlikely to be caused is obtained and therefore the retention of photoelectric conversion efficiency can be enhanced under heat stress.

The expression "there is no strong bonding force" means that a porous semiconductor sub-layer and a catalyst layer are bonded to each other with such a bonding force that the porous semiconductor sub-layer and the catalyst layer can be separated from each other without being stripped or degraded.

In the case of using two translucent substrates, that is, the support 1 and the counter support 8 in the present invention, unlike a monolithic type, the electrical continuity between the support 1 and the counter support 8 need not be taken into account. Therefore, the porous insulating layer 4, which is placed on the photoelectric conversion layer 3, is placed in order not to suppress the electrical continuity between the support 1 and the counter support 8 but in order to suppress the generation of a leakage current (leak) from fine particles contained in the photoelectric conversion layer 3 by thermal degradation to an electrolytic solution. Members forming the photoelectric conversion element according to the present invention are described below in detail.

### [Support]

In the present invention, the support 1 is located on a portion corresponding to a light-receiving surface of the photoelectric conversion element and therefore needs to be light-transmissive. Thus, the support 1 needs to be made of at least a light-transmissive material. The support 1 preferably has a thickness of about 0.2 mm to 5 mm.

The support 1 can use a material which can be generally used for solar cells and which can exhibit effects of the present invention without particular limitation. As a material used for the support 1, for example, a glass substrate made of soda glass, fused quartz glass, crystalline quartz glass, or the like; a heat-resistant resin sheet such as a flexible film; and the like can be cited.

As a material making up the flexible film (hereinafter also referred to as "film"), the following materials can be cited: for example, tetraacetyl cellulose (TAC), polyethylene terephthalate (PET), polyphenylene sulfide (PPS), polycarbonate (PC), polyarylate (PA), polyether imide (PEI), a phenoxy resin, polytetrafluoroethylene (PTFE), and the like.

In the case of forming another layer on the support 1 by heating, that is, in the case of forming the conductive layer 2 on the support 1 by heating at about 250°C, among the materials making up the flexible film, polytetrafluoroethylene (PTFE), which has a heat-resistance of 250°C or higher, is particularly preferably used.

The support 1 can be used to attach the photoelectric conversion element to another structure. That is, a peripheral portion of the support 1, such as a glass substrate, can be readily attached to another support 1 using a metalworking component and a screw. The counter support 8 may be substantially the same as the support 1 as described below.

### [Conductive layer]

In the present invention, the conductive layer 2 is placed on the light-receiving surface side of the photoelectric conversion element 10 and therefore is preferably made of a light-transmissive material. The light-transmissive material need not necessarily be a material transmitting light of all wavelengths and may be a material transmitting light with a wavelength substantially sensible for the photosensitizing element as described below.

The conductive layer 2 can use any material which can be generally used for solar cells and which can exhibit effects of the present invention without particular limitation. As such a material, indium tin composite oxide (ITO), fluorine-doped tin oxide (FTO), zinc oxide (ZnO), and the like can be cited.

In the present invention, one made by depositing the conductive layer 2 on the support 1 is referred to as a transparent electrode substrate 11 in some cases. As such a transparent electrode substrate 11, in particular, one made by depositing a conductive layer 2 made of FTO on a support 1 made of soda-lime float glass is preferably used.

The conductive layer 2 preferably has a thickness of 0.02 µm to 5 µm. The sheet resistance of the conductive layer 2 is preferably low and is preferably 40 Ω/square or less. For resistance reduction, a metal lead may be attached to the conductive layer 2. As a material for the metal lead, for example, platinum, gold, silver, copper, aluminium, nickel, titanium, and the like can be cited. In the case where the amount of light incident on the light-receiving surface is reduced by attaching the metal lead, the metal lead preferably has a size of about 0.1 mm to 4 mm.

### [Photoelectric conversion layer]

In the present invention, the photoelectric conversion layer 3 is made in such a manner that a dye or a quantum dot is adsorbed on the porous semiconductor sub-layer and the carrier transport material is filled therein. The porous semiconductor sub-layer, which is used in the photoelectric conversion layer 3, contains the semiconductor material. In particular, the porous semiconductor sub-layer may be one made by layering semiconductor particles, a filmy one having a large number of micro-pores, or the like and can be used in various forms. The porous semiconductor sub-layer is preferably such a filmy one having a large number of micro-pores. This is because the photoelectric conversion efficiency can be enhanced by injecting the carrier transport material into the micro-pores.

The semiconductor material, which makes up the porous semiconductor sub-layer, may be one generally used as a photoelectric conversion material and can be used without particular limitation. The semiconductor material may contain a single compound or may be a mixture of two or more compounds.

As the semiconductor material, the following compounds and mixtures can be cited: compounds such as titanium oxide, zinc oxide, tin oxide, iron oxide, niobium oxide, cerium oxide, tungsten oxide, nickel oxide, strontium titanate, cadmium sulfide, lead sulfide, zinc sulfide, indium phosphide, copper indium disulfide (CuInS₂), CuAl₂O₃, and SrCu₂O₂ and mixtures of these compounds. Among these, for the porous semiconductor sub-layer, titanium oxide, zinc oxide, tin oxide, or niobium oxide is preferably used and titanium oxide is more preferably used from the viewpoint of photoelectric conversion efficiency, stability, and safety.

The above-mentioned titanium oxide includes various types of titanium oxide such as anatase titanium oxide, rutile titanium oxide, amorphous titanium oxide, meta-titanic acid, and ortho-titanic acid in a narrow sense; titanium hydroxide; and hydrous titanium oxide. These types of titanium oxide can be used alone or in combination. Two crystalline forms, anatase and rutile, can be transformed into any form and anatase is common.

The semiconductor material, which makes up the porous semiconductor sub-layer, is preferably a polycrystalline sintered body containing fine particles from the viewpoint of stability, ease in crystal growth, production costs, and the like. When the semiconductor material contains the fine particles, the fine particles preferably have an average size of 5 nm to 50 nm and more preferably 10 nm to 30 nm. An effective surface area which converts incident light into electrical energy at high yield and which is sufficiently large relative to a projected area can be obtained by the use of the semiconductor material, which contains the fine particles having such an average size.

In the specification, the average size of the fine particles making up the porous semiconductor sub-layer uses data obtained from diffraction peaks in XRD (X-ray diffraction). In particular, the average particle size is calculated from the Scherrer equation and the full width at half maximum of a diffraction angle in θ/2θ measurement by XRD. In the case of, for example, anatase titanium oxide, the average particle size is calculated by measuring the full width at half maximum of a diffraction angle (2θ = about 25.3°) corresponding to the (101) plane.

The light-scattering ability of the photoelectric conversion layer 3 depends on conditions for forming the porous semiconductor sub-layer and is usually adjusted by the size (average size) of fine semiconductor particles used for layer formation. That is, when the porous semiconductor sub-layer is made of fine particles with a large average size, the porous semiconductor sub-layer has high light-scattering ability and therefore can scatter incident light to enhance the light harvesting efficiency. In contrast, when the photoelectric conversion layer 3 is made of fine particles with a small average size, the photoelectric conversion layer 3 has low light-scattering ability and an increased number of adsorption sites for dyes and therefore can increase the amount of an adsorbed sensitizing dye.

Thus, in the present invention, the photoelectric conversion layer 3 is preferably one including two or more stacked porous semiconductor sub-layers rather than one including a single porous semiconductor sub-layer. The porous semiconductor sub-layer is preferably made of fine semiconductor particles with an average size of 50 nm or more and more preferably 50 nm to 600 nm.

The average size of fine particles making up the porous semiconductor sub-layer is not particularly limited and may be within a range sufficient to exhibit effects of the present invention. From the viewpoint of effectively using incident light for photoelectric conversion, those having a uniform average particle size like commercially available fine semiconductor particles are preferably used.

The thickness of the photoelectric conversion layer 3 (that is, the porous semiconductor sub-layer) is not particularly limited and is preferably about 0.5 µm to 50 µm from the viewpoint of photoelectric conversion efficiency. When the photoelectric conversion layer 3 is made of fine semiconductor particles with an average size of 50 nm or more, the light-scattering ability thereof is likely to be high; hence, the photoelectric conversion layer 3 preferably has a thickness of 0.1 µm to 40 µm and more preferably 5 µm to 20 µm. When the photoelectric conversion layer 3 is made of fine semiconductor particles with an average size of 5 nm to less than 50 nm, the thickness thereof is preferably 0.1 µm to 50 µm and more preferably 10 µm to 40 µm.

In order to enhance the photoelectric conversion efficiency of the photoelectric conversion element, the photoelectric conversion layer 3 needs to be formed in such a manner that a large amount of a dye below is adsorbed on the porous semiconductor sub-layer. Therefore, the porous semiconductor sub-layer, which is filmy, preferably has a large specific surface area, that is, a specific surface area of about 10 m²/g to 200 m²/g.

### [Photosensitizing element]

In the present invention, as the photosensitizing element, which is adsorbed on the porous semiconductor sub-layer, a dye or a quantum dot can be cited. The dye needs to be one functioning as a photosensitizer. Organic dyes, metal complex dyes, and similar dyes having absorption in the visible range and/or the infrared range can be cited. Such dyes can be used alone or in combination.

As the organic dyes, the following dyes can be cited: azo dyes, quinone dyes, quinoneimine dyes, quinacridone dyes, squarylium dyes, cyanine dyes, merocyanine dyes, triphenylmethane dyes, xanthene dyes, porphyrin dyes, perylene dyes, indigo dyes, phthalocyanine dyes, and naphthalocyanine dyes. In general, the organic dyes have an absorbance coefficient greater than that of the metal complex dyes, which have a form in which a transition metal is coordinated molecules.

As the metal complex dyes, those having the following form can be cited: a form in which a metal such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, Ta, Ir, Pd, Os, Ga, Tb, Eu, Rb, Bi, Se, As, Sc, Ag, Cd, Hf, Re, Au, Ac, Tc, Te, or Rh is coordinated molecules. Among these, phthalocyanine metal complex dyes and ruthenium metal complex dyes are preferably used and the ruthenium metal complex dyes are more preferred. In particular, ruthenium metal complex dyes represented by Chemical Formulae (1) to (3) below are preferred.

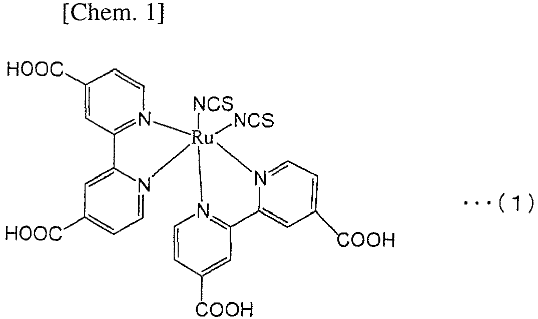

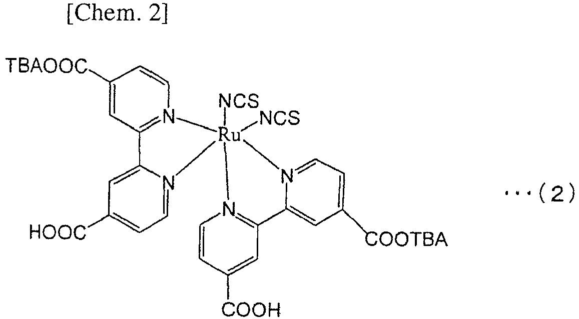

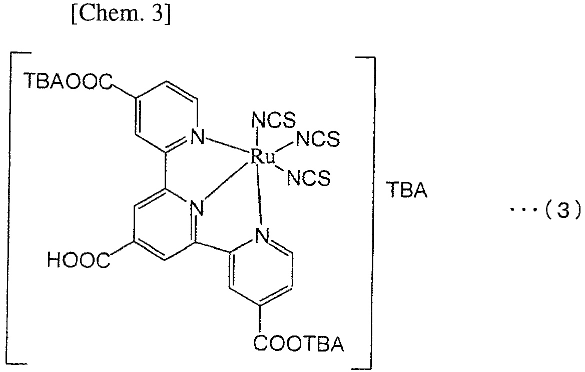

In order to allow the dye to be tightly adsorbed on the porous semiconductor sub-layer, the dye preferably contains an interlocking group such as a carboxyl group, a carboxylic anhydride group, an alkoxy group, a hydroxyl group, a hydroxyalkyl group, a sulfo group, an ester group, a mercapto group, or a phosphonyl group in its molecule. Among these groups, the carboxyl group and the carboxylic anhydride group are particularly preferred. The interlocking group provides an electrical bond facilitating the transfer of electrons between the excited dye and the conduction band of the porous semiconductor sub-layer.

As the quantum dot, which is used for the photosensitizing element, cadmium compounds, lead compounds, indium compounds, and the like can be used and for example, CdS, CdSe, PbS, PbSe, InAs, and the like can be cited.

### [Porous insulating layer]

The photoelectric conversion element according to the present invention is characterized in that the porous insulating layer 4 is placed between the photoelectric conversion layer 3 and the catalyst layer 5. As a material making up the porous insulating layer 4, a material with a high-conduction band level is preferably used and glass or the like may be used. The material with a high-conduction band level is preferably one or more selected from the group consisting of zirconium oxide, silicon oxide, aluminium oxide, niobium oxide, magnesium oxide, and strontium titanate. of a particulate porous material can be exemplified as the porous insulating layer 4. In this case, the average size of fine particles making up the porous insulating layer 4 is preferably 5 nm to 500 nm, more preferably 10 nm to 300 nm, and further more preferably 30 to 200 nm. The porous insulating layer 4 preferably has a pore size of 20 nm to 100 nm. From the viewpoint of suppressing a reverse current, the porous semiconductor sub-layer preferably has a thickness of 5 µm or more.

The area of the porous insulating layer 4 projected on the support 1 is preferably greater than the area of the photoelectric conversion layer 3 projected on the support 1 as shown in Fig. 1. Such a projected area relation allows the porous insulating layer 4 to cover side surfaces of the photoelectric conversion layer 3 and therefore the leakage of electrons from the side surfaces of the photoelectric conversion layer 3 can be suppressed. The term "projected area" refers to the area of a structure projected perpendicularly onto a support.

### [Counter support]

In the present invention, the counter support 8 is placed in order to prevent the evaporation of an electrolytic solution and the entry of water or the like into a solar cell. A material making up the counter support 8 is not particularly limited and may be one which can be used for solar cells and which can exhibit effects of the present invention. As such a material, the following materials can be cited: for example, soda-lime glass, lead glass, borosilicate glass, fused quartz glass, crystalline quartz glass, and the like. As a particularly preferred material, soda-lime float glass can be cited.

### [Counter conductive layer]

In the present invention, the counter conductive layer 6 is placed on the counter support 8, collects electrons, and has a function of connecting with a neighboring photoelectric conversion element in series. The counter conductive layer 6 can use any material which can be generally used for solar cells and which can exhibit effects of the present invention without particular limitation. As such a material, the following oxides and materials can be cited: metal oxides such as indium tin composite oxide (ITO), fluorine-doped tin oxide (FTO), and zinc oxide (ZnO) and metal materials such as titanium, tungsten, gold, silver, copper, and nickel. Among these, titanium is most preferred in view of film strength.

In the case where the catalyst layer 5 is formed from a paste containing dispersed fine particles of platinum or carbon by a coating process, the counter conductive layer 6 needs to be dense in order to suppress the penetration of the fine particles. In this case, after the catalyst layer 5 is deposited on the counter conductive layer 6, pores may be formed in the counter conductive layer 6 simultaneously with forming pores in the catalyst layer 5.

### [Catalyst layer]

In the present invention, the catalyst layer 5 is placed on the counter conductive layer 6 and has a catalytic function and a function of reducing holes in the carrier transport material. The presence of the catalyst layer 5 allows carriers to be smoothly transported. A material making up the catalyst layer 5 is not particularly limited and may be one which can be generally used for solar cells and which can exhibit effects of the present invention. Such a material is preferably, for example, platinum or carbon. The form of carbon is preferably carbon black, graphite, glassy carbon, amorphous carbon, hard carbon, soft carbon, carbon whiskers, carbon nanotubes, fullerene, or the like.

### [Sealing member]

In the present invention, the sealing member 7 is placed in order to prevent the evaporation of an electrolytic solution contained in the carrier transport material and the entry of water or the like into a solar cell. The sealing member 7 is important in absorbing (i) a falling object or the stress (impact) acting on the support 1 or (ii) the strain acting on the support 1 during long-term use.

A material making up the sealing member 7 is not particularly limited and may be one which can be generally used for solar cells and which can exhibit effects of the present invention. Such a material, as well as the material making up the support 1, is preferably, for example, a silicone resin, an epoxy resin, a polyisobutylene resin, a polyamide resin, a hot-melt resin such as a polyolefin resin or an ionomer resin, or glass frit. These materials can be used in combination in the form of a mixture or a multilayer structure including two or more layers. In the case of using a nitrile solvent or a carbonate solvent as a solvent for a redox electrolyte, the silicone resin, the hot-melt resin (for example, the ionomer resin), the polyisobutylene resin, or glass frit is particularly preferred.

### [Carrier transport material]

In the present invention, the carrier transport material 9 is interposed between the porous insulating layer 4 and the catalyst layer 5, which are located inside the sealing member 7, and means one injected into a region supported by the sealing member 7. Accordingly, at least the photoelectric conversion layer 3 and the porous insulating layer 4 are filled with the carrier transport material 9.

The carrier transport material 9 is made of a conductive substance capable of transporting ions. As a substance suitable for the carrier transport material 9, for example, a liquid electrolyte, a solid electrolyte, a gel electrolyte, a molten-salt gel electrolyte, and the like are cited.

The liquid electrolyte may be a liquid containing a redox species. The liquid electrolyte is not particularly limited and may be one which can be generally used in solar cells and the like. In particular, one containing the redox species and a solvent capable of dissolving the redox species; one containing the redox species and a molten salt capable of dissolving the redox species; and one containing the redox species, a solvent capable of dissolving the redox species, and a molten salt are cited. As the redox species, for example, an I⁻/I³⁻ system, a Br²⁻/Br³⁻ system, an Fe²⁺/Fe³⁺ system, a quinone/hydroquinone system, and the like are cited.

In particular, the following combinations are preferred: combinations of iodine (I₂) and metal iodides such as lithium iodide (LiI), sodium iodide (NaI), potassium iodide (KI), and calcium iodide (CaI₂); combinations of iodine and tetraalkylammonium salts such as tetraethylammonium iodide (TEAI), tetrapropylammonium iodide (TPAI), tetrabutylammonium iodide (TBAI), and tetrahexylammonium iodide (THAI); and combinations of bromine and metal bromides such as lithium bromide (LiBr), sodium bromide (NaBr), potassium bromide (KBr), and calcium bromide (CaBr₂). Among these combinations, the combination of LiL and I₂ is particularly preferred.

As a solvent for the redox species, the following compounds are cited: carbonate compounds such as propylene carbonate, nitrile compounds such as acrylonitrile, alcohols such as ethanol, water, and aprotic polar substances. Among these compounds, the carbonate compounds and the nitrile compounds are particularly preferred. These solvents can be used in combination.

The solid electrolyte may be a conductive material which can transport electrons, holes, or ions, which can be used as an electrolyte for solar cells, and which is non-flowable. In particular, the following substances are cited: a hole transport material such as polycarbazole, an electron transport material such as tetranitrofluorenone, a conductive polymer such as polyol, a polymeric electrolyte prepared by solidifying a liquid electrolyte with a polymeric compound, a p-type semiconductor such as copper iodide or copper thiocyanate, and an electrolyte prepared by solidifying a liquid electrolyte containing a molten salt with fine particles.

The gel electrolyte is usually composed of an electrolyte and a gelator. As the gelator, the following gelators can be cited: for example, polymeric gelators such as cross-linked polyacrylic resin derivatives, cross-linked polyacrylonitrile derivatives, polyalkylene oxide derivatives, silicone resins, and polymers having a side chain with a nitrogen-containing heterocyclic quaternary compound salt structure.

The molten-salt gel electrolyte is usually composed of the gel electrolyte and a room-temperature molten salt. As the room-temperature molten salt, for example, nitrogen-containing heterocyclic quaternary ammonium salts such as pyridinium salts and imidazolium salts are cited.

An additive may be added to the electrolyte as required. As the additive, the following compounds and salts can be cited: nitrogen-containing aromatic compounds such as t-butylpyridine (TBP) and imidazole salts such as dimethylpropylimidazole iodide (DMPII), methylpropylimidazole iodide (MPII), ethylmethylimidazole iodide (EMII), ethylimidazole iodide (EII), and hexylmethylimidazole iodide (HMII).

The concentration of the electrolyte in the electrolyte preferably ranges from 0.001 mol/L to 1.5 mol/L and more preferably 0.01 mol/L to 0.7 mol/L. When the catalyst layer is located on the light-receiving surface side of the photoelectric conversion element according to the present invention, incident light reaches the porous semiconductor sub-layer having the dye adsorbed thereon through the electrolytic solution to excite carriers. Therefore, the electrolyte concentration is preferably set in consideration of the following: performance decreases depending on the concentration of an electrolyte used in a unit cell including a catalyst layer located on the light-receiving surface side in some cases.

### [Extraction electrode]

An extraction electrode (not shown) is attached to the counter conductive layer 6 as required. The extraction electrode is used to draw a current from a solar cell. A material making up the extraction electrode is not particularly limited and may be one which can be used for solar cells and which can exhibit effects of the present invention.

### [Method for fabricating photoelectric conversion element]

A method for fabricating the photoelectric conversion element shown in Fig. 1 is described. The method for fabricating the photoelectric conversion element according to the present invention includes a step of attaching the support 1 having the conductive layer 2, the photoelectric conversion layer 3, and the porous insulating layer 4 in series to the counter support 8 having the counter conductive layer 6 and the catalyst layer 5 in series such that the porous insulating layer 4 and the catalyst layer 5 face each other and a step of injecting the carrier transport material 9 between the support 1 and the counter support 8.

Since the photoelectric conversion element is fabricated through such steps, the bonding force between the porous insulating layer 4 and the catalyst layer 5 can be reduced. For example, as shown in Fig. 1, the porous insulating layer 4 and the catalyst layer 5 can be spaced from each other with the carrier transport material 9 therebetween. This allows the generation of a reverse current from the photoelectric conversion layer 3 to the catalyst layer 5 to be suppressed. Therefore, the retention of photoelectric conversion efficiency can be enhanced under heat stress. Steps of fabricating the photoelectric conversion element according to the present invention are described below.

### [Step of forming layers on support]

In the present invention, a method for forming the conductive layer 2 on the support 1 is not particularly limited and may be, for example, a known sputtering process, spraying process, or the like. In the case of providing a metal lead (not shown) on the conductive layer 2, for example, the metal lead is formed on the support 1 by a known sputtering process or vapor deposition process and the conductive layer 2 is formed on the support 1 having the metal lead or the conductive layer 2 is formed on the support 1 and the metal lead may be formed on the conductive layer 2.

A known method can be used as a method for forming the porous semiconductor sub-layer on the conductive layer 2. In particular, the following methods are cited: (1) a method in which a paste containing semiconductor particles is applied to the conductive layer by a screen printing process, an ink jet process, or the like and is then calcined; (2) a method in which the layer is formed on the conductive layer by a CVD process, an MOCVD process, or the like using a desired source gas; (3) a method in which the layer is formed on the conductive layer by a PVD process, a vapor deposition process, a sputtering process, or the like using a solid source; and (4) a method in which the layer is formed on the conductive layer by a sol-gel process, a process making use of an electrochemical redox reaction, or the like. Among these methods, a screen printing process using paste is particularly preferred because the porous semiconductor sub-layer can be formed at low cost so as to have a large thickness.

A method for forming the porous semiconductor sub-layer using semiconductor particles containing titanium oxide is described in detail. To 750 mL of a 0.1 M aqueous solution of nitric acid (produced by Kishida Chemical Co., Ltd.), 125 mL of titanium isopropoxide (produced by Kishida Chemical Co., Ltd.) is added dropwise, followed by hydrolysis and heating at 80°C for eight hours, whereby a sol solution is prepared.

Thereafter, the obtained sol solution is heated at 230°C for 11 hours in a titanium autoclave such that fine particles containing titanium oxide are grown, followed by ultrasonic dispersion for 30 minutes, whereby a colloidal solution containing titanium oxide particles with an average size (average primary particle size) of 15 nm is prepared. Subsequently, a twofold volume of ethanol is added to the obtained colloidal solution, followed by centrifugation at a rotational speed of 5,000 rpm, whereby the titanium oxide-containing semiconductor particles are obtained.

After the titanium oxide-containing semiconductor particles are washed, a solution prepared by dissolving ethylcellulose and terpineol in anhydrous ethanol is added thereto, followed by stirring, whereby the titanium oxide-containing semiconductor particles are dispersed. Thereafter, the mixed solution is heated under vacuum conditions such that ethanol is evaporated, whereby a titanium oxide paste is obtained. The concentration is adjusted such that a final composition has, for example, a titanium oxide solid concentration of 20% by weight, an ethylcellulose concentration of 10% by weight, and a terpineol concentration of 64% by weight.

As a solvent used to prepare paste containing (suspended) the semiconductor particles, the following solvents are cited in addition to those described above: glyme solvents such as ethylene glycol monomethyl ether, alcoholic solvents such as isopropyl alcohol, solvent mixtures such as an isopropyl alcohol-toluene mixture, water, and the like.

Next, the semiconductor particle-containing paste is applied to the conductive layer by the above-mentioned process and is then calcined, whereby the porous semiconductor sub-layer is obtained. For drying and calcination, conditions such as temperature, time, and an atmosphere need to be appropriately adjusted depending on the type of the support and semiconductor particles used. For example, calcination can be performed at about 50°C to 800°C for ten seconds to 12 hours in an air atmosphere or an inert gas atmosphere. The drying and calcination can be performed at a single temperature once or can be performed twice or more by varying the temperature.

A method for forming the porous insulating layer 4 on the porous semiconductor sub-layer is not particularly limited and may be a known one. In particular, the following methods are cited: (1) a method in which a paste containing semiconductor particles is applied to the conductive layer by a screen printing process, an ink jet process, or the like and is then calcined; (2) a method in which the layer is formed on the conductive layer by a CVD process, an MOCVD process, or the like using a desired source gas; (3) a method in which the layer is formed on the conductive layer by a PVD process, a vapor deposition process, a sputtering process, or the like using a solid source; and (4) a method in which the layer is formed on the conductive layer by a sol-gel process, a process making use of an electrochemical redox reaction, or the like. Among these methods, a screen printing process using paste is particularly preferred because the porous insulating layer can be formed at low cost so as to have a large thickness.

### [Step of allowing porous semiconductor sub-layer to adsorb dye]

As a method for allowing the porous semiconductor sub-layer to adsorb the dye, the following method is cited: for example, a method in which the porous semiconductor sub-layer formed on the conductive layer 2 is immersed in a solution (solution for dye adsorption) in which the dye is dissolved. A solvent for dissolving the dye may be one capable of dissolving the dye. In particular, the following solvents are cited: alcohols such as ethanol, ketones such as acetone, ethers such as diethyl ether and tetrahydrofuran, nitrogen compounds such as acetonitrile, haloaliphatic hydrocarbons such as chloroform, aliphatic hydrocarbons such as hexane, aromatic hydrocarbons such as benzene, esters such as ethyl acetate, water, and the like. These solvents can be used in combination.

The concentration of the dye in the solution may be appropriately adjusted depending on the type of the dye and solvent used, is preferably high in order to enhance an adsorption function, and may be, for example, 5 × 10⁻⁴ mol/L or more.

### [Step of forming layers on counter support]

Next, the following step is performed using the counter support 8, which is different from the support 1: a step of forming the counter conductive layer 6 and the catalyst layer 5 on the counter support 8 in that order. Herein, substantially the same method as the method for forming the conductive layer 2 can be used to form the counter conductive layer 6.

### [Step of attaching support to counter support]

Next, the following step is performed: a step of attaching the support to the counter support such that the porous insulating layer and the catalyst layer face each other. In this step, the sealing member 7 is provided between the transparent electrode substrate 11 and the counter support 8 and is then fixed by heating or ultraviolet irradiation such that the transparent electrode substrate 11 and the counter support 8 are attached to each other.

The sealing member 7 is prepared in such a manner that a heat-fusible film, an ultraviolet-curable resin, or the like is cut in a shape surrounding the periphery of the porous insulating layer. In the case of using a silicone resin, an epoxy resin, or glass frit, the pattern of the sealing member 7 can be formed with a dispenser. On the other hand, in the case of using a hot-melt resin, the pattern can be formed in such a manner that a hole is bored in a sheet of the hot-melt resin by patterning.

### [Step of injecting carrier transport material]

The carrier transport material is injected through an electrolyte (carrier transport material) injection hole provided in the counter support in advance and thereby is filled. After the carrier transport material is injected, the electrolyte injection hole is sealed with an ultraviolet-curable resin. Through the above steps, the photoelectric conversion element 10 is fabricated as shown in Fig. 1.

### EXAMPLES

The present invention is further described in detail with reference to examples and comparative examples. The examples and the comparative examples are not intended to limit the present invention. In the examples and comparative examples below, the thickness of each layer was measured with a three-dimensional surface microstructure instrument (SURFCOM 1400A^{™}, manufactured by Tokyo Seimitsu Co., Ltd.) unless otherwise specified.

### [EXAMPLE 1]

A transparent electrode substrate 11 (Sn02 film-coated glass, produced by Nippon Sheet Glass Co., Ltd.) having a size of 10 mm × 10 mm and a thickness of 4 mm was prepared. The transparent electrode substrate 11 was one including a support 1 made of glass and a conductive layer 2, including an SnO₂ film, formed thereon.

### [Step of forming layers on support]

Next, the transparent electrode substrate 11 was coated with a commercially available titanium oxide paste (Ti-Nanoxide D/SP^{™}, produced by Solaronix SA, an average particle size of 13 nm) using a screen mask with an opening of 5 mm × 5 mm and a screen printer (Model LS-34TVA, manufactured by Newlong Seimitsu Kogyo Co., Ltd.) and was then leveled at room temperature for one hour.

Thereafter, an obtained coating was dried for 20 minutes in an oven set to 80°C and was then calcined for 60 minutes in air using a calcining furnace (Model KDF P-100, manufactured by Denken Co., Ltd.) set to 450°C. The coating and calcination of the titanium oxide paste were alternately repeated five times, whereby a porous semiconductor sub-layer (titanium oxide layer) 3 with a thickness of 15 µm was formed.

The porous semiconductor sub-layer was coated with a zirconium oxide paste using the screen printer and was then leveled at room temperature for one hour. The zirconium oxide paste was one that was prepared in such a manner that fine zirconium oxide particles (produced by C. I. Kasei Company, Limited) with a size of 50 nm were dispersed in terpineol and were further mixed with ethylcellulose into paste. The weight ratio of the fine zirconium oxide particles to terpineol to ethylcellulose was 65:30:5.

Next, the coating obtained as described above was pre-dried at 80°C for 20 minutes and was further calcined at 450°C for one hour, whereby a porous insulating layer (zirconium oxide layer) 4 with a thickness of 5 µm was formed.

### [Step of allowing porous semiconductor sub-layer to adsorb dye]

A step of allowing the porous semiconductor sub-layer prepared as described above to adsorb a dye was performed. In order to adsorb the dye, a dye adsorption solution was prepared. The dye adsorption solution was prepared in such a manner that the sensitizing dye N719 (Ruthenium 535-bis TBA^{™}, produced by Solaronix SA) was dissolved in a solvent mixture prepared by mixing acetonitrile (produced by Aldrich Chemical Company) and t-butyl alcohol (produced by Aldrich Chemical Company) at a volume ratio of 1:1 such that the concentration of the sensitizing dye N719 was 4 × 10⁻⁴ mol/L.

The porous semiconductor sub-layer was immersed in the dye adsorption solution at a temperature of 40°C for 20 hours, whereby the porous semiconductor sub-layer was allowed to adsorb the sensitizing dye. Thereafter, the porous semiconductor sub-layer was washed with ethanol (produced by Aldrich Chemical Company) and was then dried at about 40°C for about ten minutes.

An electrolytic solution was prepared in such a manner that methylpropylimidazole iodide (produced by Toyama Pure Chemical Industries, Ltd.), which was used as a redox spices, I₂ (produced by Kishida Chemical Co., Ltd.), which was used as a redox spices, guanidine thiocyanate (produced by Aldrich Chemical Company), which was used as an additive, and N-methylbenzimidazole (produced by Aldrich Chemical Company), which was used as an additive, were added to and dissolved in acrylonitrile, which was used as a solvent, such that the concentration of methylpropylimidazole iodide was 0.8 mol/L, the concentration of I₂ was 0.15 mol/L, the concentration of guanidine thiocyanate was 0.1 mol/L, and the concentration of N-methylbenzimidazole was 0.5 mol/L.

### [Step of forming layers on counter support]

Furthermore, another transparent electrode substrate (SnO₂ film-coated glass, produced by Nippon Sheet Glass Co., Ltd.) was prepared separately from that transparent electrode substrate. A catalyst layer, made of Pt, having a thickness of 5 nm was formed on this transparent electrode substrate using a batch-type high-vacuum evaporation system (Model ei-5, manufactured by ULVAC, Inc.). This transparent electrode substrate included a counter support 8 and a counter conductive layer 6 formed thereon.

### [Step of attaching support to counter support]

An ultraviolet-curable material (Model 31X-101, produced by ThreeBond Co., Ltd.) was applied to a peripheral portion of that transparent electrode substrate 11 having the porous semiconductor sub-layer and the porous insulating layer 4. An electrolyte injection hole was bored in the counter support 8, which was attached to the support 1.

Next, the ultraviolet-curable material was cured in such a manner that a coated portion was irradiated with an ultraviolet ray using an ultraviolet irradiation lamp (Novacure^{™}, manufactured by EFD Corporation), whereby a sealing member 7 was formed. The support 1 and the counter support 8 were fixed to each other as described above.

### [Step of injecting carrier transport material]

Next, an electrolyte was injected through the electrolyte injection hole. Thereafter, the electrolyte injection hole was sealed with resin, whereby a photoelectric conversion element corresponding to that shown in Fig. 1 was completed.

### [EXAMPLE 2]

A photoelectric conversion element was prepared in substantially the same manner as that described in Example 1 except that a porous insulating layer had a size of 7 mm × 7 mm.

### [EXAMPLE 3]

A photoelectric conversion element was prepared in substantially the same manner as that described in Example 2 except that a sensitizing dye was a black dye (Ruthenium 620-1H3TBA^{™}, produced by Solaronix SA).

### [EXAMPLES 4 to 6]

In Examples 4 to 6, a photoelectric conversion element was prepared in substantially the same manner as that described in Example 1 except that a porous semiconductor sub-layer had a thickness of 7 µm, 10 µm, or 14 µm.

### [EXAMPLES 7 to 9]

In Examples 7 to 9, a photoelectric conversion element was prepared in substantially the same manner as that described in Example 1 except that fine particles making up a porous semiconductor sub-layer were aluminium oxide particles with a size of about 30 nm, silicon oxide particles with a size of about 20 nm, or magnesium oxide particles with a size of about 30 nm (all produced by C. I. Kasei Company, Limited).

### [COMPARATIVE EXAMPLE 1]

A photoelectric conversion element was prepared in substantially the same manner as that described in Example 1 except that no porous insulating layer was formed. That is, a photoelectric conversion element shown in Fig. 2 was prepared.

### [COMPARATIVE EXAMPLE 2]

A photoelectric conversion element was prepared in substantially the same manner as that described in Comparative Example 1 except that a sensitizing dye was a black dye (Ruthenium 620-1H3TBA^{™}, produced by Solaronix SA).

### [COMPARATIVE EXAMPLES 3 and 4]

In Comparative Examples 3 and 4, a photoelectric conversion element was prepared in substantially the same manner as that described in Comparative Example 1 except that a porous semiconductor sub-layer had a thickness of 1.5 µm or 3 µm.

### (Evaluation method and results)

Light with an intensity of 1 kW/m² was applied to the photoelectric conversion elements of Examples 1 to 9 and Comparative Examples 1 to 4 using an AM 1.5 solar simulator, whereby the open-circuit voltage thereof was measured. After being held at 85°C for 1,000 hours, the photoelectric conversion elements were measured for open-circuit voltage under substantially the same conditions again. The retention of the open-circuit voltage of each photoelectric conversion element was determined by dividing the open-circuit voltage before holding at 85°C by the open-circuit voltage after holding at 85°C. The results are shown in Table 1.

**[Table 1]**

| | Retention (%) |
|---|---|
| Example 1 | 83 |
| Example 2 | 89 |
| Example 3 | 80 |
| Example 4 | 85 |
| Example 5 | 87 |
| Example 6 | 88 |
| Example 7 | 85 |
| Example 8 | 86 |
| Example 9 | 85 |
| Comparative Example 1 | 56 |
| Comparative Example 2 | 49 |
| Comparative Example 3 | 66 |
| Comparative Example 4 | 69 |

As is clear from the results, the photoelectric conversion elements of Examples 1 to 9 have a higher retention in open-circuit voltage as compared to those of Comparative Examples 1 to 4. Therefore, it is clear that under heat stress, the photoelectric conversion elements of Examples 1 to 9 have a higher retention in photoelectric conversion efficiency as compared to those of Comparative Examples 1 to 4. The reason why the photoelectric conversion element of each example does not have a reduced open-circuit voltage before or after being held at 85°C is probably that the porous insulating layer 4 is placed between the photoelectric conversion layer 3 and the catalyst layer 5 and therefore a leakage current is unlikely to be generated.

The embodiments and examples disclosed herein are for exemplification and should not in any way be construed as limitative. The scope of the present invention is defined by the claims rather than by the foregoing description and is intended to include meanings equivalent to the claims and all modifications within the claims.

### Reference Signs List

- 1: Support
- 2: Conductive layer
- 3: Photoelectric conversion layer
- 4: Porous insulating layer
- 5: Catalyst layer
- 6: Counter conductive layer
- 7: Sealing member
- 8: Counter support
- 9: Carrier transport material
- 10, 20: Photoelectric conversion element
- 11: Transparent electrode substrate

## Claims

1. A photoelectric conversion element (10) comprising at least one support (1), conductive layer (2), photoelectric conversion layer (3), porous insulating layer (4), catalyst layer (5), counter conductive layer (6), and counter support (8) in series,
wherein the photoelectric conversion layer (3) includes a porous semiconductor sub-layer containing a semiconductor material and a photosensitizing element adsorbed on the porous semiconductor sub-layer; a carrier transport material (9) is placed between the porous insulating layer (4) and the catalyst layer (5); the porous semiconductor sub-layer and the porous insulating layer (4) contain pores; the pores are filled with the carrier transport material (9); and there is no strong bonding force, obtained by deposition by a screen printing process, a vapor deposition process, or a sputtering process, between the porous insulating layer (4) and the catalyst layer (5).

2. The photoelectric conversion element (10) according to Claim 1, wherein the area of the porous insulating layer (4) projected on the support (1) is greater than the area of the photoelectric conversion layer (3) projected on the support (1).

3. The photoelectric conversion element (10) according to Claim 1 or 2, wherein the porous insulating layer (4) has a thickness of 5 µm or more.

4. The photoelectric conversion element (10) according to any one of Claims 1 to 3, wherein the porous insulating layer (4) is one formed by layering fine particles and has pores that are 20 nm or more and 100 nm or less.

5. The photoelectric conversion element (10) according to Claim 4, wherein the fine particles are made of one or more selected from the group consisting of zirconium oxide, aluminium oxide, silicon oxide, and magnesium oxide.

6. A method for fabricating a photoelectric conversion element (10), comprising:
a step of attaching a support (1) having a conductive layer (2), a photoelectric conversion layer (3), and a porous insulating layer (4) in series to a counter support (8) having a counter conductive layer (6) and a catalyst layer (5) in series such that the porous insulating layer (4) and the catalyst layer (5) face each other; and
a step of injecting a carrier transport material (9) between the support (1) and the counter support (8).
